# EUROPEAN PATENT SPECIFICATION

(11) **EP 3 419 217 B1**
(45) Date of publication and mention of the grant of the patent: **08.01.2020**
(21) Application number: 17176712.2
(22) Date of filing: 19.06.2017
(51) Int. Cl.: H04L 12/24, H04W 4/00

(54) **NETWORK OF NODES AND METHOD OF OPERATION**
KNOTEN NETZWERK UND BETRIEBSVERFAHREN
RÉSEAU DE NOEUDS ET PROCÉDÉ DE FONCTIONNEMENT

(43) Date of publication of application: 26.12.2018
(73) Proprietor: Vestel Elektronik Sanayi ve Ticaret A.S., 45030 Manisa (TR)
(72) Inventor: KIRISKEN, Barbaros, 45030 Manisa (TR)
(74) Representative: Flint, Adam

(56) References cited:
- US-A1- 2016 321 654
- Wikipedia: "Blockchain (database)", , 20 August 2016 (2016-08-20), XP055306814, Retrieved from the Internet: URL:https://en.wikipedia.org/w/index.php?t itle=Blockchain_(database)&oldid=735327455 [retrieved on 2016-09-30]

## Description

### Technical Field

The present disclosure relates to a network of nodes and a method of operating a network of nodes.

### Background

Networks are used to connect devices together, for example to enable the devices to communicate with each other. Networks may be wired and/or wireless. In some networks, it is useful or necessary to have a database. Such databases are often held centrally, by some "master" node or server, etc. However, failure of that master node or server, or failure of a network connection to that master node or server, means that the database may be inaccessible.

US2016321654A1 discloses a method and system for storage and retrieval of blockchains with Galois fields. One or more blocks for a blockchain are securely stored and retrieved with a modified Galois fields on a cloud or peer-to-peer (P2P) communications network. The modified Galois field provides at least additional layers for security and privacy for blockchains. The blocks and blockchains are securely stored and retrieved for cryptocurrency transactions including Bitcoin transactions and other cryptocurrency transactions.

### Summary

According to a first aspect disclosed herein, there is provided a network of nodes, wherein the network is a wireless network in which data is wirelessly transmitted between nodes, at least some of the nodes comprising:
a transceiver for transmitting and receiving data packets; and
data storage for storing a database;
wherein at least some of the nodes are arranged such that:
   if a node generates its own new data element, the node updates its own stored database with the data element, and transmits the data element to at least one other node; and
   if a node receives a data element transmitted by another node, the node updates its own database with the received data element;
   wherein the database stored in each node is in the form of a blockchain, the updating by a node of its own stored database is by adding a block corresponding to the data element to the blockchain database of the node, and the transmission of a data element from one node to another node is a transmission of a block corresponding to the data element to be added to the blockchain database of the other node;
   at least some of said nodes comprising a sensor for taking a measurement and being arranged to generate a data element corresponding to the measurement such that the database stored by said at least some of said nodes comprises data elements that correspond to sensor measurements taken by said at least some of said nodes.

A block of the blockchain corresponds to the data element. A block may correspond to plural data elements, which for example may be plural measurements taken by one or more sensors of a node.

In an example, the network is a mesh network.

In an example, the network is a Low Rate Wireless Personal Area Network (LR-WPAN) network

According to a second aspect disclosed herein, there is provided a method of operating a network of nodes, wherein the network is a wireless network in which data is wirelessly transmitted between nodes, the method comprising storing a new data element in a database at at least some of the nodes, wherein:
if a node generates a data element, the node updates its own stored database with the data element, and transmits the data element to at least one other node; and
if a node receives a data element transmitted by another node, the node updates its own database with the received data element;
wherein the database stored in each node is in the form of a blockchain, the updating by a node of its own stored database is by adding a block corresponding to the data element to the blockchain database of the node, and the transmission of a data element from one node to another node is a transmission of a block corresponding to the data element to be added to the blockchain database of the other node;
wherein at least some of said nodes comprise a sensor for taking a measurement and generating a data element corresponding to the measurement such that the database stored by said at least some of said nodes comprises data elements that correspond to sensor measurements taken by said at least some of said nodes.

### Brief Description of the Drawings

To assist understanding of the present disclosure and to show how embodiments may be put into effect, reference is made by way of example to the accompanying drawings in which:
- Figure 1: shows schematically an example of a star network topology;
- Figure 2: shows schematically an example of a mesh network topology;
- Figure 3: shows schematically an example of a blockchain; and
- Figure 4: shows schematically an example of a node.

### Detailed Description

As mentioned, networks are used to connect various devices and appliances, referred to herein as "nodes", to each other. In some networks, it is useful or necessary to have a database. Such databases are often held centrally, by some "master" node or server, etc. However, failure of that master node or server, or failure of a network connection to that master node or server, means that the database may be inaccessible, at least to some nodes. Failure of a network connection between that master node or server and a node also means that the node may not be able to update the database held by the master node or server.

Alternatively, a database may be stored locally, at the node itself or at a storage location associated with and typically located close to the node. The database may be automatically updated by the node as data is generated or obtained by the node. The nodes in the network may be arranged such that they each have a copy of the database. This in turn means that as one node generates data, and updates its own database with the data, the databases held by other nodes must also be updated with the new data. Transmitting an entire new database from one node to another can be cumbersome, time consuming and power- and resource-intensive. As an alternative, a node that has generated or obtained new data may transmit the new data to other nodes for the other nodes to add to their copy of the database. However, that in turn typically requires synchronisation between databases and cross-checking or verification, etc. to avoid duplication of entries. This is often complicated and/or not feasible. This is a particular problem where the nodes are relatively simple and low cost devices, with for example low processing power and low (electrical) power supply resources.

As a particular example, nodes can be arranged to generate or obtain data, for example by taking sensor readings of the environment or locality of the sensor node. In an example of a network of sensor nodes, a network of nodes may be arranged to take measurements of pollution or contaminant levels or of temperature or humidity at various locations across a city or other geographically spaced environment, or in a manufacturing facility, etc. Sensor nodes in such cases are often battery-powered, and thus have low power supply resources.

To overcome one or more of the problems discussed above, in accordance with some examples of the present disclosure, at least some of the nodes of a wireless network of nodes each have a transceiver for transmitting and receiving data packets and data storage for storing a database. If a node generates its own new data element, the node updates its own stored database with the data element, and transmits the data element to at least one other node. If a node receives a data element transmitted by another node, the node updates its own database with the received data element. The database may therefore be regarded as a distributed database in which (in principle) each of said nodes has a copy of the database. (The "identicality" of the databases held by each of said nodes at any particular time will be discussed further below.) The databases held by each of said nodes is stored in the form of a blockchain. Each block of the database is or corresponds to a data element. The updating by a node of its own stored database is by adding a block corresponding to the data element to the blockchain database of the node, and the transmission of a data element from one node to another node is a transmission of a block corresponding to the data element to be added to the blockchain database of the other node.

This means that the databases can be synchronised between the nodes across the network, without the need for an intermediate or "central" server. Moreover, unlike in the case of cryptocurrency discussed further below, "miners" are not required (see further below).

A blockchain is a series of connected "blocks" of data. In a blockchain system, a "block" is created to store a new item of data, which is added to an existing blockchain. A block may have a timestamp, indicating for example when the block was created. A block may also contain information regarding a previous block of the blockchain, such as the block immediately before it. This may be in the form of a link to a previous block of the blockchain. The link may be in the form of a hash of the previous block. An example of a suitable hashing algorithm is the SHA-2 (Secure Hash Algorithm 2). The effect of this is that the data contained or represented by the blockchain is permanent and cannot be amended, at least without being detected. If for example the data in a block of a blockchain is changed, the hashing algorithm used to generate the blocks would show this as the hash generated from the changed block will be different from the hash of the original block.

Blockchains are most often used in the context of financial transactions. Here, the blockchain acts like a financial ledger, and a component block represents an authorised transaction. A blockchain of this type can be used in online transactions for cryptocurrency. In a peer-to-peer network, a user may request a transaction. The network validates the user requesting the transaction in order to assure another user that they can safely issue the transaction. Once the transaction is verified, a digital record is made of it, in the form of a block added to an existing blockchain of transactions. Effectively, the blockchain is a ledger of transactions, wherein each block is an individual transaction. The chain can be updated without requiring all other transaction related to the chain to be halted.

One specific example embodiment of blockchain technology in cryptocurrency is Bitcoin. In traditional banking, a customer requests a transaction from an account. The account can be likened to a centralised database. Such a transaction requires a trusted third party (the bank) to authorise the transaction, and to confirm that a transaction has been made. In contrast, Bitcoin makes use of blockchain technology, in which the blockchain is a shared public ledger of transactions. The blockchain is updated with blocks associated with every transaction. In an example transaction scenario, a user may wish to withdraw an amount from their Bitcoin account. The user can enter this value into a personal computer, smartphone, or any such device which has enabled on it an application that facilitates Bitcoin transactions for that user. Private keys and hashing algorithms can be used to authorise the transaction. Transactions are "mined", whereby they are placed in a chronological queue to be authorised. Once authorised, the transaction is added as a block to an existing blockchain, like an entry to a financial ledger. The nature of the block is such that any attempt to alter the information would be immediately detectable. Individual users are not able to amend blocks or the blockchain, and any attempt to would be detected by way of inconsistencies in hashed values associated with each block. Mining is therefore a way of checking and authenticating a block, which is a financial transaction in the example of banking or Bitcoin. Accordingly, mining is necessary in context of financial transactions for the purposes of security and accuracy.

However, in the present disclosure, a high level of security and stringent authentication is typically not required, as the database may be "just" a record of sensor readings or the like. Accordingly, blockchain technology can be implemented without requiring mining. A distributed database can be dynamically updated without using mining.

Blockchain databases can be implemented over both star and mesh topology networks. However, due to the decentralised nature of a mesh network, a blockchain database may be of most benefit in a mesh network.

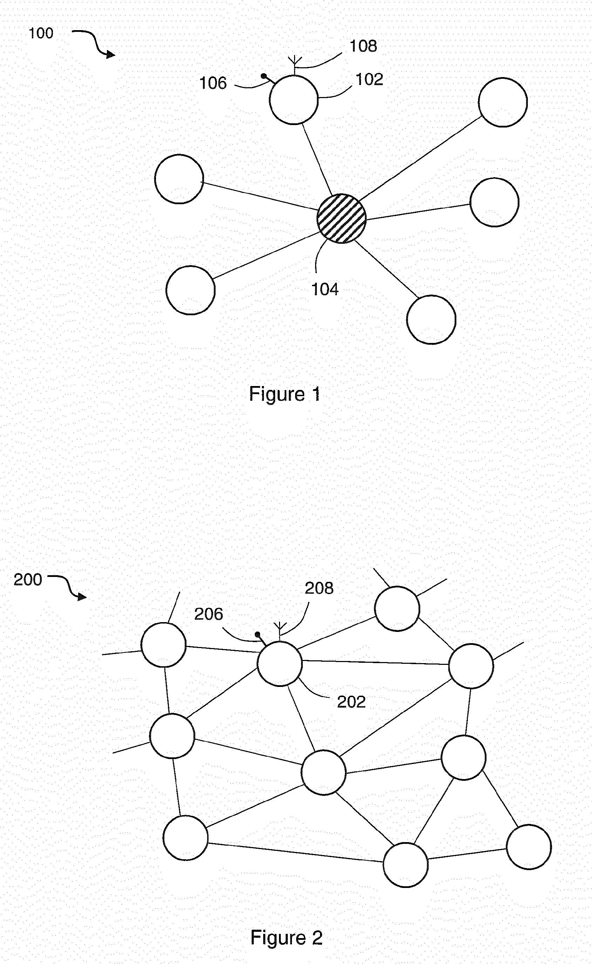

Star networks use a centralised entity to connect nodes in a network. These connections can be wired or wireless. For example, a router may provide a Wi-Fi connection for a number of devices smartphones and personal computers (including tablet computers, laptops, etc.) in which each device connects directly to the router, which may for example provide internet access for each of the connected devices. Figure 1 shows schematically an example of nodes connected in a star network 100. The star network 100 has several nodes 102 which are each connected directly to a central or master node 104 (indicated by shading in the figure). One or more of the connected nodes 102 may be or have a sensor 106, an antenna 108 for wireless communication with the central node 104, a processor, transceiver, data storage, etc.

Mesh networks on the other hand are decentralised networks in which each component node is connected to others in the network, typically in a peer-to-peer fashion, without the aid of a centralised node. These connections can be wired or wireless. Figure 2 shows an example of nodes connected in a mesh network 200. The mesh network 200 has several nodes 202 which can communicate directly with one or more other nodes 202 of the network 200 via links. One or more of the connected nodes 202 may be or have a sensor 206, an antenna 208 for wireless communication with other nodes 202, a processor, transceiver, data storage, etc. One node 202 can in principle communicate with any other node in a multi-hop manner by sending a message to a connected node 202, which then passes on the message to another connected node 202, and this is repeated until the message reaches the destination node 202.

A major advantage of mesh network topology is that there is no single point of failure which could compromise the entire network. For example, if a connection between two nodes fails, it is likely there they are able to communicate via another route. In contrast, in networks which require a central entity to provide connections between nodes, if the central entity fails, the entire network fails.

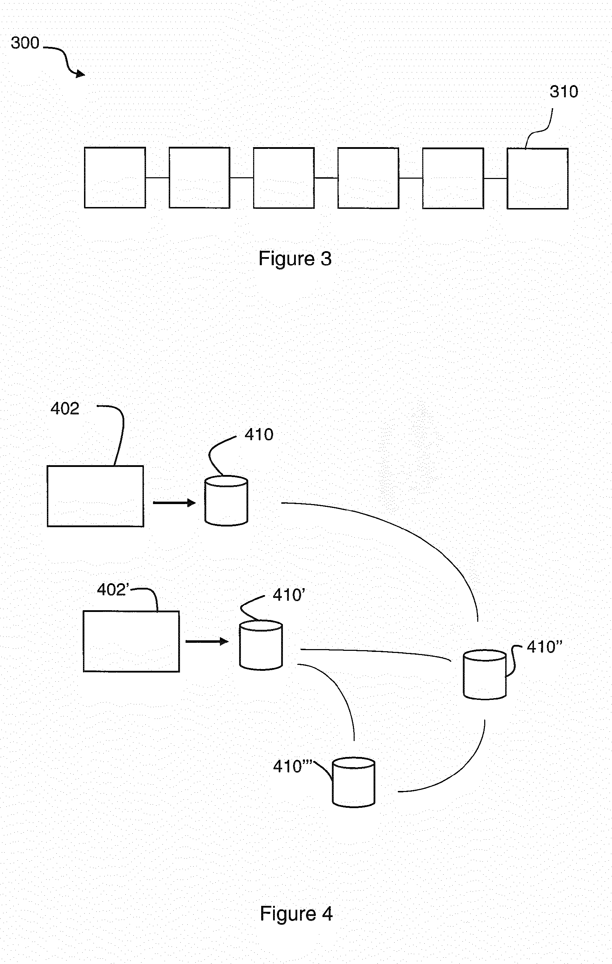

Figure 3 shows schematically an example embodiment of a blockchain database 300. The blockchain database 300 is made of several connected blocks 310. Each block 310 may correspond to one or more data elements. The blocks 310 are connected or linked by for example one block 310 containing a hash of the previous block 310.

Sensor data is particularly commonplace in "Internet of Things" (IoT) devices. In general, as used herein, an IoT device is a device that has an addressable interface (e.g. an Internet protocol (IP) address, a Bluetooth identifier (ID), a near-field communication (NFC) ID, etc.) and can transmit information to one or more other devices over a wired or wireless connection. IoT devices may in general include or be incorporated in for example refrigerators, ovens, microwaves, freezers, dishwashers, clothes washing machines, clothes dryers, furnaces, air conditioners, thermostats, televisions and other consumer electronic devices, light fixtures, vacuum cleaners, sprinklers, electricity meters, gas meters, etc. IoT devices may be deployed in locations or situations where there is no mains powers supply or the IoT device may not suitable for a mains power supply, including in for example the case that the IoT device is a sensor for temperature, humidity, pressure, light levels, pollution levels, etc. In the present context, a node may generate its own new data element by for example the node being a sensor and obtaining a sensor reading.

Sensor data is typically very small and can be sent in small data packages, with very little usage of memory and energy resources. The sensor may be arranged to taken environmental readings at regular intervals of time. Optionally, the sensor may only be arranged to "wake up" to take the reading, and then return to an inactive state, until a subsequent reading is to be taken.

Figure 4 shows schematically nodes obtaining or generating data and transmitting data elements in the form of blocks to other nodes for the other nodes to update their own local copy of the database. In particular, in Figure 4, a first node 402 obtains or generates a data element. In the case that the node 402 is a sensor, the data element may be a sensor reading. The node 402 updates its locally stored database 410 by writing that data element in the form of a block which is added to the locally stored database 410, which in turn is in the form of a blockchain. The locally stored database 410 may verify that the block can be added, by for example verifying that the new block contains a hash of the previous block of the blockchain database 410. In addition, the new block is also transmitted to another database 410" in the network. That other database 410" may also be associated with a node (not shown) and may also verify that the block can be added to that other database 410". Likewise, another node 402' obtains or generates a data element. In the case that the other node 402' is a sensor, the data element may be a sensor reading. The other node 402' updates its locally stored database 410' by writing that data element in the form of a block which is added to the locally stored database 410', which in turn is again in the form of a blockchain. The locally stored database 410' may verify that the block can be added, by for example verifying that the new block contains a hash of the previous block of the blockchain database 410. In addition, the new block is also transmitted to the or another database 410", 410'" in the network. It is also indicated that the other databases 410", 410"' can also update other databases associated with other nodes, by transmitting blocks to other databases.

In general, new data elements generated or obtained by nodes are transmitted in the form of blocks to all other nodes in the network, so that each node can update its own local copy of the database with the new data elements, all in a peer-to-peer manner. In this way, in principle, the copies of the database that are local to the nodes will be identical. It will be understood that there may be a time delay from one node obtaining or generating data and updating its own database before the databases held by other nodes are updated. However, particularly in the case that the nodes are or have sensors that take readings, it is often the case that the readings are taken relatively infrequently, whereas the databases are updated relatively frequently. Accordingly, over a sufficient period of time, the databases will be practically identical across the nodes.

One example network in which the present disclosure may be implemented with advantage is a WPAN or a wireless personal area network and, more specifically, a low-rate wireless personal area network (LR-WPAN) in accordance with the IEEE 802.15.4 Standard. In a LR-WPAN, the channel data rates (i.e. the amount of data transmitted per second say) are often low and the connection distances between nodes may be small. This means that a LR-WPAN requires little infrastructure and only requires low power for transmissions whilst still being able offer inexpensive and easy connections between a wide range of devices in close proximity. A LR-WPAN may in general use a star topology or a mesh topology, but a mesh topology has advantages for a number of applications, as discussed above.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A network of nodes (102, 202, 402), wherein the network is a wireless network in which data is wirelessly transmitted between nodes (102, 202, 402), at least some of the nodes (102, 202, 402) comprising:
a transceiver for transmitting and receiving data packets; and
data storage for storing a database (300);
wherein at least some of the nodes (102, 202, 402) are arranged such that:
if a node (102, 202, 402) generates its own new data element, the node (102, 202, 402) updates its own stored database (300) with the data element, and transmits the data element to at least one other node (102, 202, 402); and
if a node (102, 202, 402) receives a data element transmitted by another node (102, 202, 402), the node (102, 202, 402) updates its own database (300) with the received data element;
wherein the database (300) stored in each node (102, 202, 402) is in the form of a blockchain, the updating by a node (102, 202, 402) of its own stored database (300) is by adding a block (310) corresponding to the data element to the blockchain database (300) of the node (102, 202, 402), and the transmission of a data element from one node (102, 202, 402) to another node (102, 202, 402) is a transmission of a block (310) corresponding to the data element to be added to the blockchain database (300) of the other node (102, 202, 402);
at least some of said nodes (102, 202, 402) comprising a sensor (106, 206) for taking a measurement and being arranged to generate a data element corresponding to the measurement such that the database (300) stored by said at least some of said nodes (102, 202, 402) comprises data elements that correspond to sensor measurements taken by said at least some of said nodes (102, 202, 402).

2. A network according to claim 1, wherein the network is a mesh network (200).

3. A network according to claim 1 or claim 2, wherein the network is a Low Rate Wireless Personal Area Network LR-WPAN network.

4. A network according to any of claims 1 to 3, wherein at least some of the nodes (102, 202, 402) are battery-powered.

5. A method of operating a network of nodes (102, 202, 402), wherein the network is a wireless network in which data is wirelessly transmitted between nodes (102, 202, 402), the method comprising storing a new data element in a database (300) at at least some of the nodes (102, 202, 402), wherein:
if a node (102, 202, 402) generates a data element, the node (102, 202, 402) updates its own stored database (300) with the data element, and transmits the data element to at least one other node (102, 202, 402); and
if a node (102, 202, 402) receives a data element transmitted by another node (102, 202, 402), the node (102, 202, 402) updates its own database (300) with the received data element;
wherein the database (300) stored in each node (102, 202, 402) is in the form of a blockchain, the updating by a node (102, 202, 402) of its own stored database (300) is by adding a block (310) corresponding to the data element to the blockchain database (300) of the node (102, 202, 402), and the transmission of a data element from one node (102, 202, 402) to another node (102, 202, 402) is a transmission of a block (310) corresponding to the data element to be added to the blockchain database (300) of the other node (102, 202, 402);
wherein at least some of said nodes (102, 202, 402) comprise a sensor (106, 206) for taking a measurement and generating a data element corresponding to the measurement such that the database (300) stored by said at least some of said nodes (102, 202, 402) comprises data elements that correspond to sensor measurements taken by said at least some of said nodes (102, 202, 402).

6. A method according to claim 5, wherein the network is a mesh network (200).

7. A method according to claim 5 or claim 6, wherein the network is a Low Rate Wireless Personal Area Network LR-WPAN network.

8. A method according to any of claims 5 to 7, wherein at least some of the nodes (102, 202, 402) are battery-powered.

## Patentansprüche

1. Netzwerk von Knoten (102, 202, 402), wobei das Netzwerk ein drahtloses Netzwerk ist, in dem Daten zwischen Knoten (102, 202, 402) drahtlos übertragen werden, wobei mindestens einige der Knoten (102, 202, 402) Folgendes umfassen:
einen Transceiver zum Übertragen und Empfangen von Datenpaketen und
einen Datenspeicher zum Speichern einer Datenbank (300) ;
wobei mindestens einige der Knoten (102, 202, 402) derart eingerichtet sind, dass:
wenn ein Knoten (102, 202, 402) sein eigenes neues Datenelement erzeugt, der Knoten (102, 202, 402) seine eigene gespeicherte Datenbank (300) mit dem Datenelement aktualisiert und das Datenelement an mindestens einen anderen Knoten (102, 202, 402) überträgt; und
wenn ein Knoten (102, 202, 402) ein Datenelement empfängt, das von einem anderen Knoten (102, 202, 402) übertragen wird, der Knoten (102, 202, 402) seine eigene Datenbank (300) mit dem empfangenen Datenelement aktualisiert;
wobei die Datenbank (300), die in jedem Knoten (102, 202, 402) gespeichert ist, in der Form einer Blockchain ist, das Aktualisieren seiner eigenen gespeicherten Datenbank (300) durch einen Knoten (102, 202, 402) durch Hinzufügen eines Blocks (310), der dem Datenelement entspricht, zu der Blockchain-Datenbank (300) des Knotens (102, 202, 402) erfolgt und die Übertragung eines Datenelements von einem Knoten (102, 202, 402) an einen anderen Knoten (102, 202, 402) eine Übertragung eines Blocks (310), der dem Datenelement entspricht und der zu der Blockchain-Datenbank (300) des anderen Knotens (102, 202, 402) hinzugefügt werden soll, ist;
wobei mindestens einige der Knoten (102, 202, 402) einen Sensor (106, 206) zum Nehmen eines Messwerts umfassen, der dazu eingerichtet ist, ein Datenelement zu erzeugen, das dem Messwert entspricht, so dass die Datenbank (300), die durch die mindestens einigen der Knoten (102, 202, 402) gespeichert ist, Datenelemente umfasst, die Sensormesswerten entsprechen, die durch die mindestens einigen der Knoten (102, 202, 402) genommen wurden.

2. Netzwerk nach Anspruch 1, wobei das Netzwerk ein Maschennetzwerk (200) ist.

3. Netzwerk nach Anspruch 1 oder 2, wobei das Netzwerk ein Low-Rate-Wireless-Personal-Area-Network-LR-WPAN-Netzwerk ist.

4. Netzwerk nach einem der Ansprüche 1 bis 3, wobei mindestens einige der Knoten (102, 202, 402) batteriebetrieben sind.

5. Verfahren zum Betreiben eines Netzwerks von Knoten (102, 202, 402), wobei das Netzwerk ein drahtloses Netzwerk ist, in dem Daten zwischen Knoten (102, 202, 402) drahtlos übertragen werden, wobei das Verfahren ein Speichern eines neuen Datenelements in einer Datenbank (300) an mindestens einigen der Knoten (102, 202, 402) umfasst, wobei:
wenn ein Knoten (102, 202, 402) ein Datenelement erzeugt, der Knoten (102, 202, 402) seine eigene gespeicherte Datenbank (300) mit dem Datenelement aktualisiert und das Datenelement an mindestens einen anderen Knoten (102, 202, 402) überträgt; und
wenn ein Knoten (102, 202, 402) ein Datenelement empfängt, das von einem anderen Knoten (102, 202, 402) übertragen wird, der Knoten (102, 202, 402) seine eigene Datenbank (300) mit dem empfangenen Datenelement aktualisiert;
wobei die Datenbank (300), die in jedem Knoten (102, 202, 402) gespeichert ist, in der Form einer Blockchain ist, das Aktualisieren seiner eigenen gespeicherten Datenbank (300) durch einen Knoten (102, 202, 402) durch Hinzufügen eines Blocks (310), der dem Datenelement entspricht, zu der Blockchain-Datenbank (300) des Knotens (102, 202, 402) erfolgt und die Übertragung eines Datenelements von einem Knoten (102, 202, 402) an einen anderen Knoten (102, 202, 402) eine Übertragung eines Blocks (310), der dem Datenelement entspricht und der zu der Blockchain-Datenbank (300) des anderen Knotens (102, 202, 402) hinzugefügt werden soll, ist;
wobei mindestens einige der Knoten (102, 202, 402) einen Sensor (106, 206) zum Nehmen eines Messwerts und Erzeugen eines Datenelements, das dem Messwert entspricht, umfassen, so dass die Datenbank (300), die durch die mindestens einigen der Knoten (102, 202, 402) gespeichert ist, Datenelemente umfasst, die Sensormesswerten entsprechen, die durch die mindestens einigen der Knoten (102, 202, 402) genommen wurden.

6. Verfahren nach Anspruch 5, wobei das Netzwerk ein Maschennetzwerk (200) ist.

7. Verfahren nach Anspruch 5 oder 6, wobei das Netzwerk ein Low-Rate-Wireless-Personal-Area-Network-LR-WPAN-Netzwerk ist.

8. Verfahren nach einem der Ansprüche 5 bis 7, wobei mindestens einige der Knoten (102, 202, 402) batteriebetrieben sind.

## Revendications

1. Réseau de nœuds (102, 202, 402), dans lequel le réseau est un réseau sans fil dans lequel des données sont transmises sans fil entre des nœuds (102, 202, 402), au moins un certain nombre de nœuds (102, 202, 402)comprenant :
un émetteur-récepteur pour émettre et recevoir des paquets de données ; et
un stockage de données pour stocker une base de données (300) ;
dans lequel au moins un certain nombre de nœuds (102, 202, 402) sont agencés de sorte que :
si un nœud (102, 202, 402) génère son propre nouvel élément de données, le nœud (102, 202, 402) met à jour sa propre base de données stockée (300) avec l'élément de données, et transmet l'élément de données à au moins un autre nœud (102, 202, 402) ; et
si un nœud (102, 202, 402) reçoit un élément de données transmis par un autre nœud (102, 202, 402), le nœud (102, 202, 402) met à jour sa propre base de données (300) avec l'élément de données reçu ;
dans lequel la base de données (300) stockée dans chaque nœud (102, 202, 402) se présente sous la forme d'une chaîne de blocs, la mise à jour par un nœud (102, 202, 402) de sa propre base de données stockée (300) est effectuée en ajoutant un bloc (310) correspondant à l'élément de données à la base de données de la chaîne de blocs (300) du nœud (102, 202, 402), et la transmission d'un élément de données d'un nœud (102, 202, 402) à un autre nœud (102, 202, 402) est la transmission d'un bloc (310) correspondant à l'élément de données à ajouter à la base de données de la chaîne de blocs (300) de l'autre nœud (102, 202, 402) ;
au moins un certain nombre desdits nœuds (102, 202, 402) comprenant un capteur (106, 206) pour prendre une mesure et étant agencé pour générer un élément de données correspondant à la mesure de sorte que la base de données (300) stockée par ledit au moins un certain nombre de nœuds (102, 202, 402) comprend des éléments de données qui correspondent aux mesures du capteur prises par ledit au moins un certain nombre desdits nœuds (102, 202, 402).

2. Réseau selon la revendication 1, dans lequel le réseau est un réseau maille (200).

3. Réseau selon, soit la revendication 1, soit la revendication 2, dans lequel le réseau est un réseau Low Rate Wireless Personal Area Network LR-WPAN.

4. Réseau selon l'une quelconque des revendications 1 à 3, dans lequel au moins un certain nombre de nœuds (102, 202, 402) est alimenté par batteries.

5. Procédé de fonctionnement d'un réseau de nœuds (102, 202, 402), dans lequel le réseau est un réseau sans fil dans lequel des données sont transmises sans fil entre des nœuds (102, 202, 402), le procédé consistant à stocker un nouvel élément de données dans une base de données (300) à hauteur au moins d'un certain nombre de nœuds (102, 202, 402), dans lequel :
si un nœud (102, 202, 402) génère un élément de données, le nœud (102, 202, 402) met à jour sa propre base de données stockée (300) avec l'élément de données, et transmet l'élément de données à au moins un autre nœud (102, 202, 402) ; et
si un nœud (102, 202, 402) reçoit un élément de données transmis par un autre nœud (102, 202, 402), le nœud (102, 202, 402) met à jour sa propre base de données (300) avec l'élément de données reçu ;
dans lequel la base de données (300) stockée dans chaque nœud (102, 202, 402) se présente sous la forme d'une chaîne de blocs, la mise à jour par un nœud (102, 202, 402) de sa propre base de données stockée (300) est effectuée en ajoutant un bloc (310) correspondant à l'élément de données à la base de données de la chaîne de blocs (300) du nœud (102, 202, 402), et la transmission d'un élément de données d'un nœud (102, 202, 402) à un autre nœud (102, 202, 402) est la transmission d'un bloc (310) correspondant à l'élément de données à ajouter à la base de données de la chaîne de blocs (300) de l'autre nœud (102, 202, 402) ;
dans lequel au moins un certain nombre desdits nœuds (102, 202, 402) comprend un capteur (106, 206) pour prendre une mesure et générer un élément de données correspondant à la mesure de sorte que la base de données (300) stockée par ledit au moins un certain nombre de nœuds (102, 202, 402) comprend des éléments de données qui correspondent aux mesures du capteur prises par ledit au moins un certain nombre desdits nœuds (102, 202, 402).

6. Procédé selon la revendication 5, dans lequel le réseau est un réseau maille (200).

7. Procédé selon, soit la revendication 5, soit la revendication 6, dans lequel le réseau est un réseau Low Rate Wireless Personal Area Network LR-WPAN.

8. Procédé selon l'une quelconque des revendications 5 à 7, dans lequel au moins un certain nombre de nœuds (102, 202, 402) est alimenté par batteries.
